# EUROPEAN PATENT APPLICATION

(11) **EP 4 406 713 A2**
(43) Date of publication of application: **31.07.2024**
(21) Application number: 23215198.5
(22) Date of filing: 08.12.2023
(51) Int. Cl.: B27N 1/00, B01F 25/64, B27N 3/14, B27N 3/04, B27N 1/02, B27N 3/20

(54) **THERMALLY FUSED BOARD MANUFACTURING APPARATUS AND MIXING APPARATUS**

(30) Priority: 08.12.2022 JP 2022196171
(71) Applicant: Seiko Epson Corporation, Tokyo 160-8801 (JP)
(72) Inventor: YAMAGAMI, Toshiaki, Suwa-shi, 392-8502 (JP); KOJIMA, Hideki, Suwa-shi, 392-8502 (JP); ITO, Akio, Suwa-shi, 392-8502 (JP)
(74) Representative: Lewis Silkin LLP

(57) **Abstract**

A thermally fused board manufacturing apparatus includes: a fiberizing section that produces a fiber material by fiberizing a raw material containing fabric; a material supply pipe section that carries the fiber material; a humidifying section configured to humidify the fiber material; a carriage pipe section that adds a material different from the fiber material to the fiber material and carries the material and the fiber material; a mixing section that produces a deposition fiber material by mixing the material and the fiber material, at part of the carriage pipe section; a depositing section that forms a fiber aggregate by depositing the deposition fiber material; a thermal fusing section that forms a thermally fused board by applying heat and pressure to the fiber aggregate; and a controller that controls the humidifying section.

## Description

The present application is based on, and claims priority from JP Application Serial Number 2022-196171, filed December 8, 2022, the disclosure of which is hereby incorporated by reference herein in its entirety.

### BACKGROUND

### 1. Technical Field

The present disclosure relates to a thermally fused board manufacturing apparatus and a mixing apparatus.

### 2. Related Art

As shown in JP-A-2004-25857, there is known an apparatus for manufacturing a thermally fused board by mixing fiber and resin using a needle punching machine.

However, the above apparatus may be incapable of mixing fiber and resin adequately particularly when the fiber is short fiber and thus incapable of obtaining a thermally fused board with high strength.

### SUMMARY

According to an aspect of the present disclosure, a thermally fused board manufacturing apparatus includes: a fiberizing section that produces a fiber material by fiberizing a raw material containing fabric; a material supply pipe section that carries the fiber material; a humidifying section configured to humidify the fiber material; a carriage pipe section that adds a material different from the fiber material to the fiber material and carries the material and the fiber material; a mixing section that produces a deposition fiber material by mixing the material and the fiber material, at part of the carriage pipe section; a depositing section that forms a fiber aggregate by depositing the deposition fiber material; a thermal fusing section that forms a thermally fused board by applying heat and pressure to the fiber aggregate; and a controller that controls the humidifying section.

According to another aspect of the present disclosure, a mixing apparatus includes: a carriage pipe section that adds a fiber-shaped thermally meltable resin material to a fiber material obtained by fiberization of a raw material containing fabric and carries the resin material and the fiber material and a mixing section, at part of the carriage pipe section, that produces a deposition fiber material by mixing the resin material and the fiber material. The mixing section has a vane portion having a plurality of rib-shaped vanes on a rotatable disc and a duct portion that couples the carriage pipe section in such a manner that the carriage pipe section faces the vane portion. In the vane portion, an interval of adjacent ones of the vanes is larger than average longitudinal fiber lengths of the fiber material and the resin material.

### BRIEF DESCRIPTION OF THE DRAWINGS

FIG. 1 is a schematic diagram showing the configurations of a thermally fused board manufacturing apparatus and a mixing apparatus.
Fig. 2 is a sectional view showing a second fiber aggregate and a surface sheet stacked thereon.
Fig. 3 is a sectional view showing a thermally fused board.
Fig. 4 is a perspective view of a mixing section.
Fig. 5 is a sectional view showing the mixing section in a direction in which a rotary shaft extends.
Fig. 6 is a sectional view showing the mixing section in a direction perpendicular to the direction in which the rotary shaft extends.
Fig. 7 is a perspective view showing a vane portion of the mixing section.

### DESCRIPTION OF EMBODIMENTS

### 1. Configuration of a Thermally Fused Board Manufacturing Apparatus

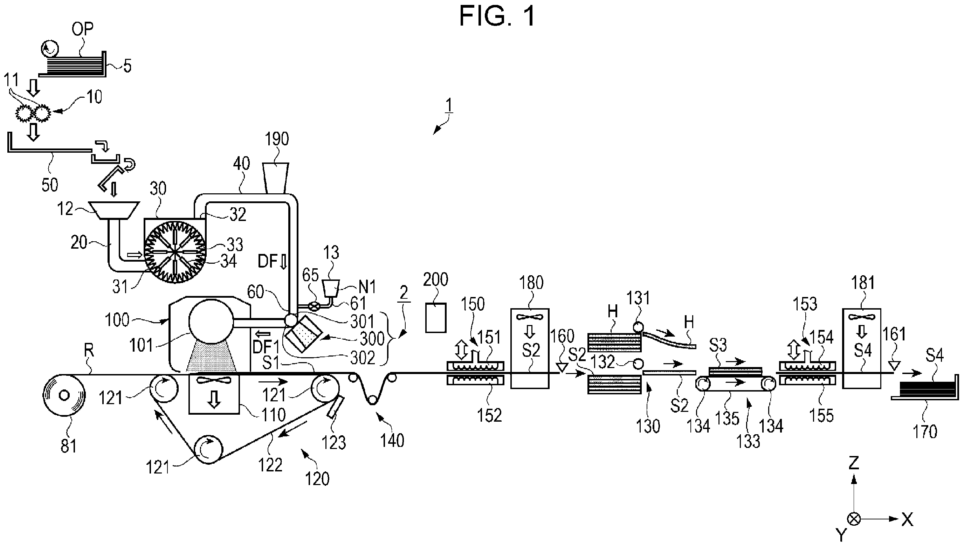

With reference to Figs. 1 to 3, a thermally fused board manufacturing apparatus 1 according to an embodiment is described. Note that the directions in Figs. 1 to 3 are described using the three-dimensional coordinate system. For the illustrative convenience, as to the z-axis, the positive direction is referred to as an upward direction, upward, or simply up, and the negative direction is referred to as a downward direction, downward, or simply down. As to the y-axis, the positive direction is referred to as a right direction, rightward, or simply right, and the negative direction is referred to as a left direction, leftward, or simply left. As to the x-axis, the positive direction is referred to as a front direction, frontward, or simply front, and the negative direction is referred to as a rear direction, rearward, or simply rear.

Note that the thermally fused board manufacturing apparatus 1 is hereinafter referred to simply as a manufacturing apparatus 1.

As shown in Fig. 1, the manufacturing apparatus 1 is configured including a raw material supplying section 5, a chopping section 10, a fiberizing section 30, a humidifying section 190, a first resin component hopper 13, a mixing section 300, a depositing section 100, a shape-maintaining sheet supply roller 81, a shape-maintaining sheet transporting section 120, a buffer section 140, a first thermal fusing section 150, a first cooling section 180, a first cutting section 160, a stacking section 130, a transporting section 133, a second thermal fusing section 153, a second cooling section 181, and a second cutting section 161, which are disposed in the order in which a thermally fused board S4 is formed from a raw material OP.

Note that an earlier location and direction of this order is referred to as upstream, and a later location and direction of this order is referred to downstream.

The manufacturing apparatus 1 further includes a controller 200. The controller 200 is configured including, e.g., a central processing unit (CPU) that performs overall control of the sections of the manufacturing apparatus 1, a universal asynchronous receiver-transmitter (UART) that manages input and output, a logical circuit such as a field-programmable gate array (FPGA) or a programmable logic device (PLD), and a storage. A CPU is also called a processor.

The storage is configured including, e.g., a rewritable non-volatile memory such as a flash read-only memory (ROM) or a hard disk drive (HDD) and a volatile memory such as a random-access memory (RAM).

The CPU of the controller 200 executes various kinds of processing by reading programs such as firmware stored in the non-volatile memory in the storage and using the volatile memory in the storage as a work area.

As shown in Fig. 1, the raw material supplying section 5 supplies the raw material OP to the chopping section 10. This raw material OP contains used or unneeded fabric and, for example, contains at least one of the following types of fiber: plant fiber such as cotton, and hemp, animal fiber such as silk, wool, alpaca, angora, cashmere, and mohair, recycled fiber such as rayon, cupra, and polynosic, semisynthetic fiber such as acetate, triacetate, and Promix, synthetic fiber such as nylon, polyester, acrylic, polyvinyl chloride, and polyurethane, and the like.

Also, the fiber may contain, for example, fine chips of pulp, used paper, wood, bamboo, or the like.

The raw material supplying section 5 supplies the raw material OP to the chopping section 10. The chopping section 10 chops the raw material OP supplied from the raw material supplying section 5. The chopping section 10 is configured by, for example, a fabric cutter.

The chopping section 10 has a pair of chopping blades 11. By moving in relatively opposite directions, the pair of chopping blades 11 at the surface can chop the raw material OP into chopped pieces between them. Note that one of the paired chopping blades 11 may be stationary. The shapes and sizes of the chopped pieces chopped by the chopping section 10 are small pieces whose length of one side being, for example, preferably 100 mm or below or more preferably 70 mm or below, so as to be suitable for the next fiberization process at the fiberizing section 30. Note that in a case where the chopping section 10 is a fabric cutter, cut pieces are formed as the chopped pieces.

A volumetric feeder 50 is capable of supplying the fiberizing section 30 with a certain amount of chopped pieces at a time. Specifically, the volumetric feeder 50 charges a certain amount of chopped pieces into a chopped piece hopper 12, and the chopped pieces are supplied to the fiberizing section 30 through a chopped piece introduction pipe 20.

For example, the volumetric feeder 50 may be configured to supply chopped pieces consecutively with a vibratory feeder or to supply chopped pieces after a certain amount of them are accumulated in a flexible container bag.

The chopped piece introduction pipe 20 communicates with a supply port 31 of the fiberizing section 30. The fiberizing section 30 has a rotor 34 having rotary blades and configured to rotate and a stator 33 having stationary blades. The chopped pieces supplied to the fiberizing section 30 through the supply port 31 are fiberized between the rotary blades of the rotating rotor 34 and the stationary blades of the stator 33 and are produced into fiberized fibers DF which are a fiber material.

To "fiberize" means to disentangle a fiberization target which is an aggregate of a plurality of fibers, i.e., a chopped piece here, into cotton shape, yarn by yarn and further fiber by fiber, or in a unit of a few of them. The result of this fiberization is the fiberized fibers DF.

Note that the range of the average longitudinal fiber length of the fiberized fibers DF produced by the fiberizing section 30 is, for example, preferably 1 mm or above and 20 mm or below. This facilitates mixing of the fiberized fibers DF at the mixing section 300. The shape of the fiberized fibers DF does not necessarily have to be entirely cotton-shaped, and yarn-shaped or strip-shaped ones may be mixed therein. Also, the fiberized fibers DF may be entangled together into one chunk. In other words, the fiberized fibers DF may include lumps.

By the airflow generated by the rotating rotor 34, the fiberized fibers DF are moved to the outer periphery of the fiberizing section 30 and released through a release port 32. Then, with this airflow, the fiberized fibers DF are discharged to a material supply pipe section 40 through the release port 32. Note that the fiberizing section 30 may additionally include an airflow generating mechanism to actively generate airflow and move the fiberized fibers DF.

The humidifying section 190 located downstream of the fiberizing section 30 can humidify the fiberized fibers DF discharged to the material supply pipe section 40. For example, the humidifying section 190 is configured including a warm-air evaporative humidifier that has a moisture-containing filter (not shown) and passes air through the filter to supply the fiberized fibers DF with humidified air with increased humidity.

Note that the humidifying section 190 does not have to be a warm-air evaporative humidifier and may be, for example, an ultrasonic humidifier, a steam humidifier, an evaporative humidifier, or the like.

Supplying the fiberized fibers DF with humidified air helps prevent the fiberized fibers DF from attaching to the inside of the mixing section 300 to be described later due to static electricity.

Note that a humidity-detecting sensor (not shown) is provided in a duct portion 310 of the mixing section 300. Also, the humidifying section 190 is located upstream of the mixing section 300 in the direction in which the fiberized fibers DF are carried.

The controller 200 controls the humidifying section 190 located upstream based on the humidity detected by the sensor in the mixing section 300 located downstream and humidifies the fiberized fibers DF in the material supply pipe section 40 to bring the inside of the duct portion 310 to a predetermined humidity.

Specifically, to help prevent the fiberized fibers DF from being charged with static electricity due to dryness, the controller 200 preferably controls the humidifying section 190 so that the humidity may fall within a range higher than 20%RH. Also, to help prevent the fiberized fibers DF from being entangled due to excessively high humidity, the controller 200 preferably controls the humidifying section 190 so that the humidity may fall within a range lower than 50%RH. Humidity within these ranges facilitates mixing of the fiberized fibers DF in the mixing section 300.

The fiberized fibers DF given a predetermined humidity by the humidifying section 190 are carried by the material supply pipe section 40 in the carriage direction indicated by the arrow.

The material supply pipe section 40 communicates with a carriage pipe section 60. When the fiberized fibers DF passes through the carriage pipe section 60, a first resin component N1 is added to the fiberized fibers DF from a first resin component transport pipe 61. The first resin component N1 is a material different from the fiber material and is a fiber-shaped thermally meltable resin material. Note that thermally meltable is also called thermoplastic.

For example, the range of the average longitudinal fiber length of the first resin component N1 is preferably 1 mm or above and 20 mm or below. This facilitates the mixing of the first resin component N1 in the mixing section 300. Note that the range of the average longitudinal fiber length of the first resin component N1 is preferably similar to that of the fiberized fibers DF.

The first resin component N1 is a meltable material containing a resin material with what is called thermal meltability. For example, the first resin component N1 contains at least one of the following: thermoplastic resins such as various polyolefins like polypropylene and polyethylene, polyester such as polyethylene terephthalate (PET), acrylic resins, polyvinyl chloride, polyamide, ethylen-vinyl acetate (EVA), and polylactic acid (PLA), various thermoplastic elastomers, and the like. Also, if the fiberized fibers DF contain a similar component, that component can be used for this purpose.

Note that the first resin component N1 is preferably 20% by weight (wt%) or higher and 50wt% or below. This facilitates the mixing of the first resin component N1 in the mixing section 300.

The first resin component N1 is preferably one that melts or softens at 200°C or below. This is because temperatures higher than 200°C may deteriorate the fiberized fibers DF contained in mixed fiberized fibers DF1 by, e.g., burning or combusting them. Meanwhile, in order to reduce the energy consumption of the manufacturing apparatus 1, the first resin component N1 may be one that melts or softens at 160°C or below, although there are a limited number of such types. In order not to deteriorate the fiberized fibers DF and not to limit the types of the first resin component N1 as much as possible, the first resin component N1 is preferably one that melts or softens at temperatures within the range of 160°C or above and 200°C or below.

The first resin component N1 is charged into the first resin component hopper 13. The first resin component N1 is supplied from the first resin component hopper 13 to the carriage pipe section 60 through the first resin component transport pipe 61.

In this event, the first resin component N1 is adjusted by an adjustment valve 65 in its amount to be supplied to the carriage pipe section 60. Also, the pipe diameter of the first resin component transport pipe 61 is preferably smaller than that of the carriage pipe section 60. This is because it makes it easier for the first resin component N1 to be dispersed among the fiberized fibers DF when supplied to the carriage pipe section 60.

The carriage pipe section 60 carries the fiberized fibers DF and the first resin component N1 added thereto to the mixing section 300. Note that the fiberized fibers DF to which the first resin component N1 has been added but which has yet to be mixed therewith in the mixing section 300 are hereinafter referred to as unmixed fiberized fibers DF0 (not shown).

The mixing section 300 has an introduction port portion 301 and a discharge port portion 302. The introduction port portion 301 and the discharge port portion 302 both communicate with the carriage pipe section 60.

The unmixed fiberized fibers DF0 are introduced into the introduction port portion 301 from the carriage pipe section 60, agitated and mixed in the mixing section 300, and thereby produced into the mixed fiberized fibers DF1 which are a deposition fiber material. The mixed fiberized fibers DF1 thus produced are discharged through the discharge port portion 302 and returned to the carriage pipe section 60.

In other words, the mixing section 300 receives the unmixed fiberized fibers DF0 from the carriage pipe section 60 through the introduction port portion 301, mixes the unmixed fiberized fibers DF0 into the mixed fiberized fibers DF1, and returns the mixed fiberized fibers DF1 to the carriage pipe section 60 through the discharge port portion 302.

In this way, the mixing section 300 is configured at a midway position on the carriage pipe section 60 via the introduction port portion 301 and the discharge port portion 302. Thus, at part of the carriage pipe section 60, the mixing section 300 can mix the fiberized fibers DF and the first resin component included in the unmixed fiberized fibers DF0 and produce the mixed fiberized fibers DF1.

By the mixing section 300, the first resin component and the fiberized fibers DF are mixed adequately. As a result, unevenness in the manufactured thermally fused board S4 can be reduced, and the thermally fused board S4 can be enhanced in strength. Note that a detailed configuration of the mixing section 300 will be described later.

The mixed fiberized fibers DF1 produced by the mixing section 300 is carried by the carriage pipe section 60 in the carriage direction indicated by the arrow and supplied to the depositing section 100.

The depositing section 100 deposits the mixed fiberized fibers DF1 and thereby forms a first fiber aggregate S1 which is a fiber aggregate.

The depositing section 100 is configured including a rotatable forming drum 101, which is a deposition mechanism and a dispersion mechanism for dispersing the mixed fiberized fibers DF1 in air.

The mixed fiberized fibers DF1 and air are supplied into the rotating forming drum 101 and agitated. A small-aperture screen is provided at the surface of the forming drum 101, so that the mixed fiberized fibers DF1 may be ejected a predetermined amount at a time along with air. The diameter of the apertures of the small-aperture screen is related to the size of the mixed fiberized fibers DF1, and each aperture may be circular but is preferably an elongated aperture of approximately 5 mm × 25 mm because it allows productivity and homogeneity to be achieved at the same time.

The forming drum 101 further mixes and homogenizes the mixed fiberized fibers DF1 so that they may pass through the small-aperture screen at the surface. After passing through the small-aperture screen of the forming drum 101, the mixed fiberized fibers DF1, while dispersing in air, fall onto a shape-maintaining sheet R on a mesh belt 122 to be described later, and are deposited while being separated from the air.

The shape-maintaining sheet supply roller 81 located rearward of the manufacturing apparatus 1 supplies an elongated shape-maintaining sheet R to the depositing section 100. The shape-maintaining sheet R is to be a base portion forming the bottom surface of the first fiber aggregate S1, which is a fibrous web formed by the depositing section 100.

The shape-maintaining sheet R is a sheet capable of supporting and maintaining the shape of the first fiber aggregate S1 and is, for example, nonwoven cloth. Note that the shape-maintaining sheet R may be woven cloth or paper as long as the sheet has air permeability.

The shape-maintaining sheet transporting section 120 that transports the shape-maintaining sheet R frontward is disposed below the forming drum 101. The shape-maintaining sheet transporting section 120 is configured such that the mesh belt 122 is looped around a plurality of looping rollers 121. The mesh belt 122 is an endless mesh belt formed of mesh. As the looping rollers 121 rotate clockwise, the mesh belt 122 too goes around clockwise.

Note that the mesh belt 122 may be metallic or resinous. The mesh aperture diameter is preferably approximately 60 to 125 µm.

The mixed fiberized fibers DF1 falling from the forming drum 101 of the depositing section 100 while dispersing are deposited onto the shape-maintaining sheet R transported by the mesh belt 122. Note that when a baffle plate (not shown) is installed under the forming drum 101, the area on which the mixed fiberized fibers DF1 fall can be adjusted in the width direction which is the left-right direction.

The depositing section 100 is configured including a suction device 110 capable of generating an airflow downward. The suction device 110 is located under the mesh belt 122 on which the shape-maintaining sheet R is mounted. By sucking the separated air and using the airflow thus generated, the suction device 110 can cause the mixed fiberized fibers DF1 to adhere by suction onto the shape-maintaining sheet R via the mesh belt 122 into a web shape.

Note that when a gas volume which is an amount of gas sucked by the suction device 110 is larger than a gas volume which is an amount of gas including the falling mixed fiberized fibers DF1, it can help prevent the mixed fiberized fibers DF1 from being blown out of the manufacturing apparatus 1.

The gas sucked by the suction device 110 includes particles in the raw material having passed through the shape-maintaining sheet R and the mesh belt 122, and thus, it is preferable to install a cyclone or filter dust collector at the exhaust side and separate and remove the particles.

Also, while moving, the mesh belt 122 is scraped by a cleaning blade 123 so that dirt and the like may be removed from its surface.

A sheet-shaped first fiber aggregate S1 is formed by the depositing section 100. The first fiber aggregate S1 is a fibrous web obtained by deposition of a predetermined thickness of the mixed fiberized fibers DF1 onto the shape-maintaining sheet R.

Note that the density of a second fiber aggregate S2 to be described later is determined based on the amount of mixed fiberized fibers DF1 deposited by the depositing section 100, the transport speed of the mesh belt 122, and conditions of heat and pressure application by the first thermal fusing section 150 located downstream. For example, to obtain a 10-mm-thick second fiber aggregate S2 with a density of approximately 0.1 g/cm³ to 0.15 g/cm³, the depositing section 100 preferably deposits approximately 40 mm to 60 mm of the mixed fiberized fibers DF1.

The first fiber aggregate S1 is transported to the first thermal fusing section 150 through the buffer section 140.

The buffer section 140 has what is called a dancer roller, which is a bridge roller capable of moving up and down. By moving the dancer roller up and down, the buffer section 140 can adjust the transport amount of the first fiber aggregate S1 transported to the first thermal fusing section 150.

The first thermal fusing section 150 has an upper first heat/pressure application portion 151 and a lower second heat/pressure application portion 152.

At least one of the first heat/pressure application portion 151 and the second heat/pressure application portion 152 is configured to be able to ascend and descend, and they can apply pressure to the first fiber aggregate S1 by sandwiching the first fiber aggregate S1 in between or release the first fiber aggregate S1 by moving away from each other.

As controlled by the controller 200, the first thermal fusing section 150 can sandwich the first fiber aggregate S1 with the first heat/pressure application portion 151 and the second heat/pressure application portion 152, fuse the first resin component N1 by applying heat and pressure under predetermined conditions, and form the second fiber aggregate S2.

After that, in the release state, the second fiber aggregate S2 thus formed is removed, and the first fiber aggregate S1 to be processed next is transported to between the first heat/pressure application portion 151 and the second heat/pressure application portion 152.

Note that a condition for the pressure application is preferably such that the first heat/pressure application portion 151 and the second heat/pressure application portion 152 apply pressure to the first fiber aggregate S1 with a pressure of 0.01 MPa to 30 MPa.

The first heat/pressure application portion 151 and the second heat/pressure application portion 152 each have a heater. While applying pressure to the first fiber aggregate S1, the first heat/pressure application portion 151 and the second heat/pressure application portion 152 can heat the first fiber aggregate S1 using the heaters.

In order to reduce deterioration of the fiberized fibers DF as described earlier, it is preferable that the temperature at which the first fiber aggregate S1 is heated by the heaters of the first heat/pressure application portion 151 and the second heat/pressure application portion 152 be 200°C or below. Meanwhile, in order to reduce the energy consumption of the manufacturing apparatus 1, the heating temperature is preferably 160°C or below, although this will limit the types of the first resin component N1. In order not to deteriorate the fiberized fibers DF, reduce the energy consumption of the manufacturing apparatus 1, and not to limit the types of the first resin component N1 as much as possible, the heating condition is preferably such that the heating temperature is in the range of 160°C or above and 200°C or below.

The first resin component N1 is contained in the first fiber aggregate S1, dispersed. The heaters of the first heat/pressure application portion 151 and the second heat/pressure application portion 152 apply heat to the pressurized first fiber aggregate S1 with temperatures equal to or higher than ones at which the first resin component N1 melts or softens. The melted or softened first resin component N1 seeps in between the fiberized fibers DF in the first fiber aggregate S1, fusing the first fiber aggregate S1.

Because the first thermal fusing section 150 applies pressure and heat to the first fiber aggregate S1 at the same time, even though the first resin component N1 melts or softens, deformation of the first fiber aggregate S1 can be reduced, or the first fiber aggregate S1 can be re-formed.

The first fiber aggregate S1 having undergone the heat and pressure application by the first thermal fusing section 150 is referred to as a second fiber aggregate S2. Note that the first thermal fusing section 150 does not have to apply heat and pressure to the first fiber aggregate S1 at the same time, and may first apply heat and then apply pressure.

The buffer section 140 makes an adjustment so that the first fiber aggregate S1 is stopped and not transported when subjected to the heat and pressure application by the first thermal fusing section 150.

After undergoing the heat and pressure application, the second fiber aggregate S2 released from the first heat/pressure application portion 151 and the second heat/pressure application portion 152 is transported by the buffer section 140 to the first cooling section 180.

The first cooling section 180 has an airflow generating device facing downward and can generate an airflow of room-temperature outside air or cooled air toward the second fiber aggregate S2. The first cooling section 180 is capable of what is called forced cooling by blowing the airflow against the second fiber aggregate S2 after the heat and pressure application. The first cooling section 180 cools the second fiber aggregate S2 down to a temperature below the temperatures at which the first resin component N1 melts or softens.

By being cooled by the first cooling section 180, the first resin component N1 in between the fiberized fibers DF in the second fiber aggregate S2 hardens. When hardening, the first resin component N1 can become integral with the fiberized fibers DF in the second fiber aggregate S2, achieving rigid hardening.

Note that the manufacturing apparatus 1 may be without the first cooling section 180 and let the second fiber aggregate S2 after the heat and pressure application stand in outside air, i.e., cool naturally.

The second fiber aggregate S2 cooled and hardened by the first cooling section 180 is cut into predetermined size by the first cutting section 160. The first cutting section 160 preferably cuts the second fiber aggregate S2 according to the size of a surface sheet H to be described later.

The first cutting section 160 is, for example, an ultrasonic cutter. The first cutting section 160 may be a cutter configured with a stationary blade and a mobile blade. Also, the first cutting section 160 may be, for example, a rotary cutter.

The second fiber aggregate S2 in a cut-sheet shape cut by the first cutting section 160 is mounted onto a second fiber aggregate tray (not shown) of the stacking section 130.

Note that the cut-sheet-shaped second fiber aggregate S2 cut by the first cutting section 160 may be a finished thermally fused board. In this case, the manufacturing apparatus 1 has a configuration including, among the sections described above, the raw material supplying section 5, the chopping section 10, the fiberizing section 30, the humidifying section 190, the first resin component hopper 13, the mixing section 300, the depositing section 100, the shape-maintaining sheet supply roller 81, the shape-maintaining sheet transporting section 120, the buffer section 140, the first thermal fusing section 150, the first cooling section 180, and the first cutting section 160. The mixing section 300 mixes the first resin component and the fiberized fibers DF adequately. This can reduce componential difference between the front and back surfaces of the manufactured second fiber aggregate S2 or unevenness in the second fiber aggregate S2, and can therefore enhance the strength of the second fiber aggregate S2.

The manufacturing apparatus 1 may include a peeler (not shown) having a peeling bar and a take-up reel, so that before the first resin component N1 hardens, the shape-maintaining sheet R is peeled off from the second fiber aggregate S2 by the peeling bar and taken up by the take-up reel. The peeler can thus remove the shape-maintaining sheet R when the shape-maintaining sheet R included in the second fiber aggregate S2 is unneeded.

The stacking section 130 includes a second cut-sheet feeder 132. The second cut-sheet feeder 132 can feed the cut-sheet-shaped second fiber aggregate S2 from the second fiber aggregate tray to the transporting section 133 one by one.

The stacking section 130 also includes a first cut-sheet feeder 131. The stacking section 130 further includes a surface sheet H tray (not shown) for mounting the cut-sheet-shaped surface sheets H containing a thermally meltable second resin component N2. The first cut-sheet feeder 131 can feed the cut-sheet-shaped surface sheet H from the surface sheet H tray to the transporting section 133 one by one.

The second cut-sheet feeder 132 and the first cut-sheet feeder 131 can respectively feed the second fiber aggregate S2 and the surface sheet H one by one using, for example, a friction feed method with a robber roller or the like.

Note that a base material forming the surface sheet H is chemical fiber such as PLA, PET, polypropylene, or polyethylene or plant fiber such as cotton or hemp.

The second resin component N2 contained in the surface sheet H contains a thermally meltable resin. For example, the second resin component N2 contains at least one of the following: thermoplastic resins such as various polyolefins like polypropylene and polyethylene, acrylic resins, polyvinyl chloride, polyester, polyamide, EVA, and PLA, various thermoplastic elastomers, and the like. The second resin component N2 may be, for example, the same as the first resin component N1 described above.

The second resin component N2 is preferably one that melts or softens at 200°C or below. This is because temperatures higher than 200°C may deteriorate the fiberized fibers DF contained in the second fiber aggregate S2 by, e.g., burning or combusting them. Meanwhile, in order to reduce the energy consumption of the manufacturing apparatus 1, the second resin component N2 is preferably one that melts or softens at 160°C or below, although there are a limited number of such types. In order not to deteriorate the fiberized fibers DF and not to limit the types of the second resin component N2 as much as possible, the second resin component N2 is preferably one that melts or softens at temperatures within the range of 160°C or above and 200°C or below.

The temperature condition under which the second resin component N2 melts or softens may be, for example, similar to that for the first resin component N1.

The first cut-sheet feeder 131 of the stacking section 130 is located above the second cut-sheet feeder 132. As controlled by the controller 200, the surface sheet H fed from the first cut-sheet feeder 131 is positioned relative to and stacked on top of the second fiber aggregate S2 fed from the second cut-sheet feeder 132. The second fiber aggregate S2 having the surface sheet H stacked thereon is referred to as a surface-sheet-attached fiber aggregate S3.

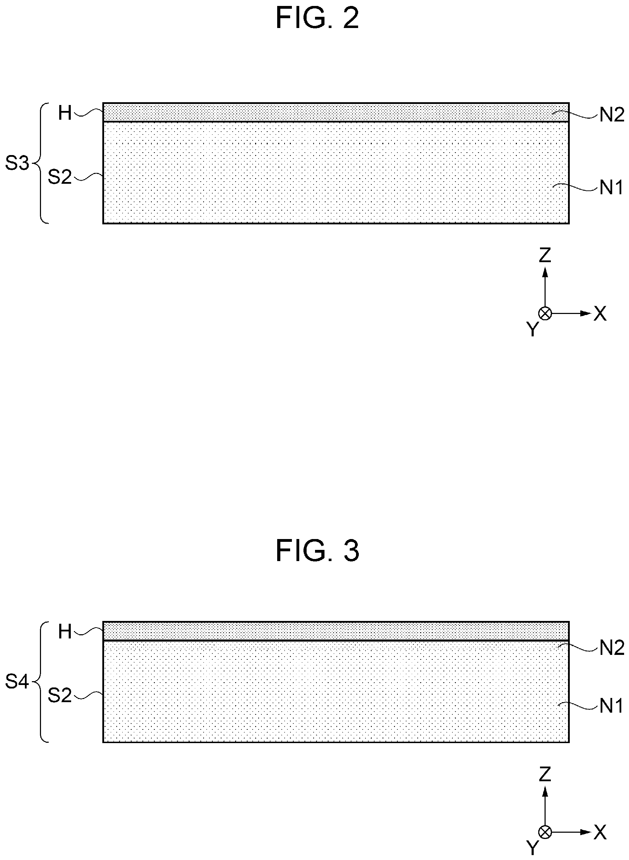

As shown in Fig. 2, the surface sheet H containing the second resin component N2 is stacked onto the second fiber aggregate S2 containing the hardened first resin component N1 therein, and the surface-sheet-attached fiber aggregate S3 is thus formed.

Note that, in the above example, the stacking section 130 stacks the surface sheet H on the upper surface of the second fiber aggregate S2, which is one of its surfaces. The stacking section 130 may be configured including another surface sheet H tray and another cut-sheet feeder to stack another surface sheet H onto the lower surface of the second fiber aggregate S2, which is the other surface, as well.

The transporting section 133 is configured such that a belt 135 is looped around a plurality of looping rollers 134. The belt 135 is an endless belt. As the looping rollers 134 rotate clockwise, the belt 135 too goes around clockwise.

The transporting section 133 transports the surface-sheet-attached fiber aggregate S3 mounted on the belt 135 to the second thermal fusing section 153.

The second thermal fusing section 153 includes an upper third heat/pressure application portion 154 and a lower fourth heat/pressure application portion 155. Note that the second thermal fusing section 153 may be, for example, configured similarly to the first thermal fusing section 150.

At least one of the third heat/pressure application portion 154 and the fourth heat/pressure application portion 155 is configured to be able to ascend and descend, and they can apply pressure to the surface-sheet-attached fiber aggregate S3 by sandwiching the surface-sheet-attached fiber aggregate S3 in between or release the surface-sheet-attached fiber aggregate S3 by moving away from each other.

As controlled by the controller 200, the second thermal fusing section 153 can sandwich the surface-sheet-attached fiber aggregate S3, which is the second fiber aggregate S2 having the surface sheet H stacked thereon, with the third heat/pressure application portion 154 and the fourth heat/pressure application portion 155, fuse the second resin component N2 by applying heat and pressure under predetermined conditions, and form the thermally fused board S4. In this event, the second thermal fusing section 153 can also re-fuse the first resin component N1 contained in the second fiber aggregate S2.

After that, in the release state, the thermally fused board S4 thus formed is removed, and the surface-sheet-attached fiber aggregate S3 to be processed next is transported to between the third heat/pressure application portion 154 and the fourth heat/pressure application portion 155.

Note that a condition for the pressure application is preferably such that the third heat/pressure application portion 154 and the fourth heat/pressure application portion 155 of the second thermal fusing section 153 apply pressure to the surface-sheet-attached fiber aggregate S3 with a pressure of 0.01 MPa to 30 MPa.

The third heat/pressure application portion 154 and the fourth heat/pressure application portion 155 each have a heater. While applying pressure to the surface-sheet-attached fiber aggregate S3, the third heat/pressure application portion 154 and the fourth heat/pressure application portion 155 can heat the surface-sheet-attached fiber aggregate S3 using the heaters.

In order to reduce deterioration of the fiberized fibers DF as described earlier, it is preferable that the temperature at which the surface-sheet-attached fiber aggregate S3 is heated by the heaters of the third heat/pressure application portion 154 and the fourth heat/pressure application portion 155 be 200°C or below. Meanwhile, in order to reduce the energy consumption of the manufacturing apparatus 1, the heating temperature is preferably 160°C or below, although the types of the second resin component N2 contained in the surface sheet H will be limiting then. In order not to deteriorate the fiberized fibers DF, reduce the energy consumption of the manufacturing apparatus 1, and not to limit the types of the second resin component N2 as much as possible, the heating condition is preferably such that the heating temperature is in the range of 160°C or above and 200°C or below.

The heating temperature in the heat and pressure application by the second thermal fusing section 153 may be one at which both the first resin component N1 and the second resin component N2 can melt or soften.

The surface-sheet-attached fiber aggregate S3 contains the second resin component N2 inside the stacked surface sheet H. The heaters of the third heat/pressure application portion 154 and the fourth heat/pressure application portion 155 apply heat to the pressurized surface-sheet-attached fiber aggregate S3 with temperatures equal to or higher than one at which the second resin component N2 melts or softens. In the surface-sheet-attached fiber aggregate S3, the melted or softened first resin component N1 fuses and becomes integral with the second resin component N2 in the surface sheet H.

In this way, the second thermal fusing section 153 fuses the stacked surface sheet H and the surface-sheet-attached fiber aggregate S3 containing the second fiber aggregate S2.

Also, in this event, if the second thermal fusing section 153 applies heat with a temperature equal to or higher than one at which not only the second resin component N2 but also the first resin component N1 contained in the stacked second fiber aggregate S2 melt or soften, the melted or softened first resin component N1 can once again seep in between the fiberized fibers DF in the second fiber aggregate S2 and fuse. In this way, the second thermal fusing section 153 can fuse the surface-sheet-attached fiber aggregate S3 more rigidly, including not only the second resin component N2 but also the first resin component N1 inside the stacked second fiber aggregate S2.

Because the second thermal fusing section 153 not only fuses the second resin component N2 but also re-fuses the first resin component N1 as well, the bonding strength can be increased.

Because the second thermal fusing section 153 applies pressure and heat to the surface-sheet-attached fiber aggregate S3 at the same time, even when the second resin component N2 and the first resin component N1 melt or soften, deformation of the surface-sheet-attached fiber aggregate S3 can be reduced, or the surface-sheet-attached fiber aggregate S3 can be re-formed.

The surface-sheet-attached fiber aggregate S3 having undergone the heat and pressure application by the second thermal fusing section 153 is referred to as the thermally fused board S4. Note that the second thermal fusing section 153 does not have to apply heat and pressure to the surface-sheet-attached fiber aggregate S3 at the same time, and may first apply heat and then apply pressure.

As shown in Fig. 3, the surface sheet H and the second fiber aggregate S2 are fused by the melted or softened second resin component N2, and the thermally fused board S4 is thus formed.

The transporting section 133 makes an adjustment so that the surface-sheet-attached fiber aggregate S3 is stopped and not transported when subjected to the heat and pressure application by the second thermal fusing section 153.

After undergoing the heat and pressure application, the thermally fused board S4 released from the third heat/pressure application portion 154 and the fourth heat/pressure application portion 155 is transported by the transporting section 133 to the second cooling section 181. Note that by extending the transporting section 133 to the second cooling section 181 or by providing a transport mechanism different from the transporting section 133, the thermally fused board S4 can be transported toward the second cooling section 181.

The second cooling section 181 has an airflow generating device facing downward and can generate an airflow toward the thermally fused board S4. The second cooling section 181 is capable of what is called forced cooling by blowing the airflow against the thermally fused board S4 after the heat and pressure application. The second cooling section 181 cools the thermally fused board S4 down to a temperature below the temperatures at which the second resin component N2 melts or softens. Note that the second cooling section 181 may cool the thermally fused board S4 down to a temperature below the temperatures at which the first resin component N1 and the second resin component N2 melt or soften.

Note that the second cooling section 181 may be configured, for example, similarly to the first cooling section 180.

By being cooled by the second cooling section 181, the second resin component N2 hardens. When the second resin component N2 hardens, the second resin component N2 can become integral with the thermally fused board S4 including the surface sheet H and the second fiber aggregate S2, achieving rigid hardening. Also, the first resin component N1 can harden again.

A film rich in the second resin component N2 is formed on the upper surface of the thermally fused board S4, which is a surface where the surface sheet H is stacked. This film can exhibit non-permeability against water.

Note that the manufacturing apparatus 1 may be without the second cooling section 181 and let the thermally fused board S4 after the heat and pressure application stand in outside air, i.e., cool naturally.

The thermally fused board S4 cooled and hardened by the second cooling section 181 is cut into predetermined size by the second cutting section 161.

The second cutting section 161 is, for example, an ultrasound cutter. The second cutting section 161 may be a cutter configured with a stationary blade and a mobile blade. The second cutting section 161 may be, for example, a rotary cutter.

The cut thermally fused board S4 is discharged to a thermally fused board tray 170. Note that the second cutting section 161 may be, for example, configured similarly to the first cutting section 160.

The mixing section 300 mixes the first resin component and the fiberized fibers DF adequately. As a result, unevenness in the manufactured thermally fused board S4 can be reduced, and the thermally fused board S4 can be enhanced in strength.

The thermally fused board S4 thus manufactured is water-resistant at its surface and is used as an alternative material for a building material such as a wood board, a resin board, or a resin sheet or used as a member for various products as, e.g., a board material, a sheet material, or a wrapping material. If the surface sheet H is printed in advance, the surface of the thermally fused board S4 can be changed in its texture or design. The thermally fused board S4 can also be used for moisture-proofing purposes.

### 2. Configuration of the Mixing section

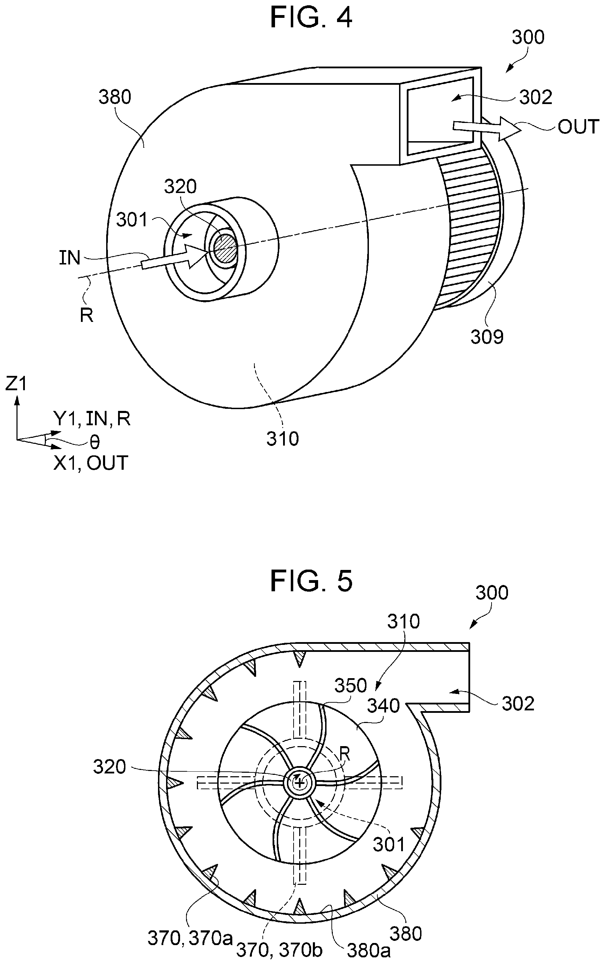

Using Figs. 4 to 7, the configuration of the mixing section 300 is described. As shown in Fig. 4, the mixing section 300 receives the unmixed fiberized fibers DF0 in an introduction direction IN which is the direction of the introduction port portion 301, agitates and mixes the unmixed fiberized fibers DF0 inside the mixing section 300, and discharges the resultant mixed fiberized fibers DF1 in a discharge direction OUT which is the direction of the discharge port portion 302.

Note that the upstream end of the introduction port portion 301 and the downstream end of the discharge port portion 302 are both coupled to the carriage pipe section 60.

As shown in Fig. 4, the mixing section 300 includes the duct portion 310 having the introduction port portion 301 and the discharge port portion 302. The duct portion 310 is formed by being covered by a columnar housing portion 380. The duct portion 310 has thereinside a vane portion 350 to be described later. The duct portion 310 allows the carriage pipe section 60 to be coupled facing the vane portion 350 through the introduction port portion 301, so that the unmixed fiberized fibers DF0 can be introduced from the carriage pipe section 60 toward the vane portion 350.

Note that the diameter of the introduction port portion 301 is preferably larger than the average longitudinal fiber lengths of the fiberized fibers DF and the first resin component N1 and preferably exceeds 20 mm. Also, the diameter of the discharge port portion 302 is preferably larger than the average longitudinal fiber lengths of the fiberized fibers DF and the first resin component N1 and preferably exceeds 20 mm.

A rotary shaft 320 is rotated by a motor 309. A disc portion 340 to be described later is coupled to the rotary shaft 320 with a coupling portion (not shown) and is rotatable.

The introduction direction IN of the unmixed fiberized fibers DF0 at the introduction port portion 301 is an extension direction R of the rotary shaft 320 and is referred to as a direction Y1. Meanwhile, the discharge direction OUT of the mixed fiberized fibers DF1 at the discharge port portion 302 is a direction intersecting with the extension direction R of the rotary shaft 320 and is referred to as a direction X1.

The direction Y1 and the direction X1 are not on the same plane and are at "twisted positions" relative to each other. The angle formed by the direction Y1 and the direction X1 when they are moved in a direction Z1 perpendicular to them to be on the same plane is an angle θ.

The preferable range of the angle θ in order for the unmixed fiberized fibers DF0 to smoothly move when introduced from the introduction port portion 301, agitated by the vane portion 350, and discharged from the discharge port portion 302 as the mixed fiberized fibers DF1 is 85° or above and 95° or below. The angle θ will be described in detail later.

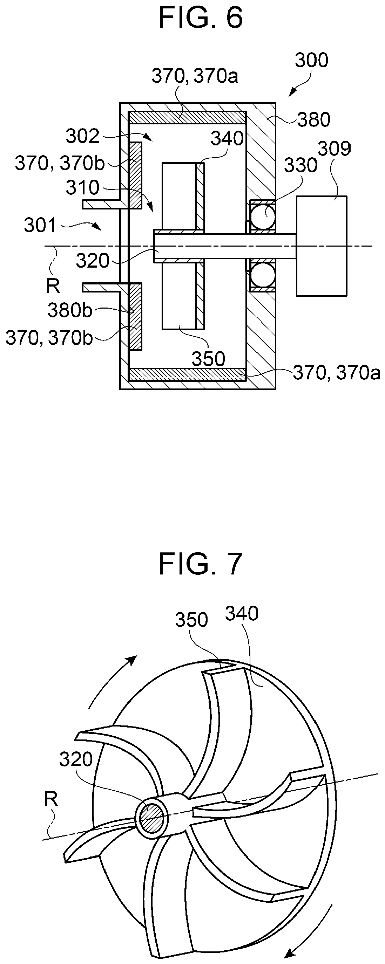

As shown in Figs. 5 to 7, the vane portion 350 is formed at a surface of the disc portion 340 on the introduction port portion 301 side, the vane portion 350 having a plurality of rib-shaped vanes at certain intervals along the rotation direction shown in Fig. 7. The interval between adjacent vanes in the circumferential direction of the disc portion 340 is preferably larger than the average longitudinal fiber lengths of the fiberized fibers DF and the first resin component N1 and preferably exceeds 20 mm. This is because it is more likely for the fiberized fibers DF and the first resin component N1 to be entangled when the interval between adjacent vanes is equal to or smaller than the average fiber lengths.

Note that hereinafter, the surface of the disc portion 340 which is on the introduction port portion 301 side and is where the vane portion 350 is formed is referred to as a front surface, and the surface of the disc portion 340 where the vane portion 350 is not formed is referred to as a back surface. Also, each vane of the vane portion 350 is referred to simply as a vane portion 350.

Each vane portion 350 is formed as a quadrilateral plate on the disc portion 340. The vane portion 350 may be formed to curve in a centrifugal direction. Note that the centrifugal direction is the direction in which a centrifugal force acts when the disc portion 340 rotates.

The longer side of the quadrilateral plate forming the vane portion 350 extends perpendicularly from the front surface of the disc portion 340 toward the introduction port portion 301. The shorter side of the quadrilateral plate forming the vane portion 350 extends in the centrifugal direction from a portion of engagement with the rotary shaft 320, which is the rotational center of the disc portion 340, to the edge of the circumference of the disc portion 340.

In a case of a curving vane portion 350, the shorter side of the quadrilateral vane portion 350 preferably curves in a direction opposite from the rotational direction so as to form an arc from the portion of engagement with the rotary shaft 320 in the centrifugal direction. As a result, the vane portion 350 has what is called a turbo vane shape and is capable of efficient transport.

As shown in Fig. 7, as the rotary shaft 320 rotates clockwise, the vane portions 350 formed on the disc portion 340 too rotate clockwise along with the disc portion 340.

The unmixed fiberized fibers DF0 can be agitated and mixed efficiently by the rotation of the turbo-vane-shaped vane portions 350. Note that to promote the mixing further, there may be a multi-stage configuration of a plurality of disc portions 340 each having the vane portions 350.

Also, as shown in Fig. 5, in the duct portion 310, a gap with predetermined dimensions is formed between a first inner wall 380a of the housing portion 380 and the position of the circumferential rim of the disc portion 340, or the positions of the centrifugal-direction edges of the short sides of the vane portions 350. The unmixed fiberized fibers DF0 move through this gap while being agitated by the vane portions 350, and can travel toward the discharge port portion 302 as the mixed fiberized fibers DF1.

As shown in Figs. 5 and 6, the housing portion 380 has a plurality of projections 370 protruding toward the inside of the duct portion 310. The projections 370 are each formed as a triangular column with a convex shape protruding toward the inside of the duct portion 310.

The projections 370 include a plurality of first projections 370a and a plurality of second projections 370b at different locations on the housing portion 380. The plurality of first projections 370a and the plurality of second projections 370b are each provided at certain intervals.

The first projections 370a are provided on the first inner wall 380a of the housing portion 380, which is a circumferential side of the columnar shape. The first projections 370a protrude from the first inner wall 380a toward the short-side edges of the vane portions 350, which are edges in the centrifugal direction.

Meanwhile, the second projections 370b are provided on a second inner wall 380b of the housing portion 380, which is a top surface side of the columnar shape and is on the introduction port portion 301 side. The second projections 370b protrude from the second inner wall 380b toward the long-side edges of the vane portions 350, which are edges on the introduction port portion 301 side.

As shown in Fig. 6, the motor 309 side, i.e., the back surface side, of the disc portion 340 is supported by a bearing portion 330 provided at the housing portion 380, via the rotary shaft 320. Note that the bearing portion 330 is configured including bearings.

Meanwhile, on the introduction port portion 301 side, i.e., the front surface side, of the disc portion 340, the rotary shaft 320 does not extend, and no support is given.

On the introduction port portion 301 side of the disc portion 340, the introduction direction IN of the introduction port portion 301 runs along the direction Y1, which is the extension direction R of the rotary shaft 320.

As a result, the unmixed fiberized fibers DF0 is introduced in the introduction direction IN of the introduction port portion 301 where the rotary shaft 320 does not extend and there is no support, or in other words, there is no obstruction. Thus, the unmixed fiberized fibers DF0 can be smoothly introduced into the duct portion 310 from the introduction port portion 301 without being obstructed by the rotary shaft 320 and the like.

The unmixed fiberized fibers DF0 introduced into the duct portion 310 scatter by colliding against the front surface of the disc portion 340 having the vane portions 350, are subjected to abrupt change of direction of movement by the vane portions 350 on the front surface of the rotating disc portion 340, and are thereby agitated.

Also, the unmixed fiberized fibers DF0 are agitated between the rotating vane portions 350 and the second projections 370b provided on the second inner wall 380b of the housing portion 380.

Further, the agitation of the unmixed fiberized fibers DF0 is further promoted between the rotating vane portions 350 and the first projections 370a provided on the first inner wall 380a because they are disentangled due to the occurrence of turbulence.

The above agitation adequately promotes dispersion and mixing of the first resin component N1 and the fiberized fibers DF that are included in the unmixed fiberized fibers DF0, turning them into the mixed fiberized fibers DF1.

As a result, unevenness in the manufactured thermally fused board S4 can be reduced, and the thermally fused board S4 can be enhanced in strength.

The mixed fiberized fibers DF1 move in directions toward the first inner wall 380a of the housing portion 380, which is the centrifugal direction, as the vane portions 350 rotate. Then, the mixed fiberized fibers DF1 are discharged from the discharge port portion 302 along the airflow generated by the rotation of the vane portions 350.

The mixed fiberized fibers DF1 receive a centrifugal force when rotated along the first inner wall 380a of the housing portion 380 by the rotation of the vane portions 350. This centrifugal force makes the mixed fiberized fibers DF1 fly out in a direction of the tangent to the circumference of the first inner wall 380a. This direction is the discharge direction OUT and is the direction X1. This direction is also the direction of the airflow generated by the rotation of the vane portions 350.

By this centrifugal force and airflow given by the vane portions 350, the mixed fiberized fibers DF1 can be discharged smoothly to the discharge port portion 302 of the duct portion 310.

Note that the direction of the tangent to the circumference of the first inner wall 380a is also the direction of the tangent to the circumference of the disc portion 340.

As described above, the unmixed fiberized fibers DF0 are introduced into the duct portion 310 from the introduction port portion 301 along the direction Y1, which is the introduction direction IN of the introduction port portion 301. The direction Y1 is also the direction of the extension direction R of the rotary shaft 320.

Meanwhile, the mixed fiberized fibers DF1 are discharged from the discharge port portion 302 of the duct portion 310 along the direction X1, which is the discharge direction OUT of the discharge port portion 302. The direction X1 is also a direction of the tangent to the circumference of the disc portion 340.

Then, the angle formed by the introduction port portion 301 and the discharge port portion 302, i.e., the angle between the direction Y1 and the direction X1, is the angle θ.

Because the angle θ is also the angle formed between the extension direction R of the rotary shaft 320 that rotates the disc portion 340 and the direction of the tangent to the circumference of the disc portion 340, the angle θ is preferably in the range from 85° to 95° and more preferably approximately 90°.

With this angle θ, the mixing section 300 can receive the unmixed fiberized fibers DF0 through the introduction port portion 301, adequately agitate and mix the unmixed fiberized fibers DF0, and discharge the resultant mixed fiberized fibers DF1 through the discharge port portion 302 without stagnation.

Note that, as described earlier, a humidity detecting sensor (not shown) is provided in the duct portion 310 of the mixing section 300. The sensor is capable of detecting the humidity of at least one of the unmixed fiberized fibers DF0 and the mixed fiberized fibers DF1 in the duct portion 310.

Also, the unmixed fiberized fibers DF0 and the mixed fiberized fibers DF1 in the duct portion 310 are moistened to a moderate degree by the humidifying section 190. This helps prevent generation of static electricity and in turn attachment onto the duct portion 310 during agitation in the mixing section 300.

### 3. Configuration of the Mixing Apparatus

As shown in Fig. 1, an apparatus including the mixing section 300 and the carriage pipe section 60 described above is configured as a mixing apparatus 2.

Having already described above, the mixing section 300 and the carriage pipe section 60 forming the mixing apparatus 2 are described only briefly with reference to Figs. 4 to 7.

The carriage pipe section 60 adds the first resin component N1, which is a fiber-shaped thermally meltable resin material, to the fiberized fibers DF, which are a fiber material obtained by fiberization of the raw material OP containing fabric, and carries them.

The mixing section 300 receives the unmixed fiberized fibers DF0 from the carriage pipe section 60 through the introduction port portion 301, mixes the unmixed fiberized fibers DF0 into the mixed fiberized fibers DF1, and returns the mixed fiberized fibers DF1 to the carriage pipe section 60 through the discharge port portion 302. In this way, the mixing section 300 is configured at a midway position on the carriage pipe section 60 via the introduction port portion 301 and the discharge port portion 302. Thus, the mixing section 300 can mix the fiberized fibers DF and the first resin component N1 and produce the mixed fiberized fibers DF1, which is a deposition fiber material, at part of the carriage pipe section 60.

Note that the average longitudinal fiber lengths of the fiberized fibers DF and the first resin component N1 are preferably 1 mm or above and 20 mm or below.

The mixing section 300 includes the duct portion 310 having the introduction port portion 301 and the discharge port portion 302. Inside the duct portion 310, the vane portion 350 having a plurality of rib-shaped vanes is provided at the rotatable disc portion 340. The duct portion 310 allows the carriage pipe section 60 to be coupled facing the vane portion 350 through the introduction port portion 301, so that the unmixed fiberized fibers DF0 can be introduced from the carriage pipe section 60 toward the vane portion 350.

Note that the upstream end of the introduction port portion 301 and the downstream end of the discharge port portion 302 are both coupled to the carriage pipe section 60.

The interval between adjacent vanes of the vane portion 350 in the circumferential direction of the disc portion 340 is preferably larger than the average longitudinal fiber lengths of the fiberized fibers DF and the first resin component N1 and preferably exceeds 20 mm.

Also, the diameter of the introduction port portion 301 is preferably larger than the average longitudinal fiber lengths of the fiberized fibers DF and the first resin component N1 and preferably exceeds 20 mm. Further, the diameter of the discharge port portion 302 is also preferably larger than the average longitudinal fiber lengths of the fiberized fibers DF and the first resin component N1 and preferably exceeds 20 mm.

As shown in Fig. 4, the angle formed between the introduction port portion 301 and the discharge port portion 302 is the angle θ. The range of the angle θ in order for the mixing section 300 to smoothly receive the unmixed fiberized fibers DF0 through the introduction port portion 301 and smoothly discharge the resultant mixed fiberized fibers DF1 through the discharge port portion 302 after agitation is preferably 85° or above and 95° or below. The angle θ is more preferably approximately 90°.

Within this range of the angle θ, the unmixed fiberized fibers DF0 and the mixed fiberized fibers DF1 can smoothly move inside the duct portion 310 of the mixing section 300, and it is less likely that their mixing is hindered by being, e.g., stagnant inside the duct portion 310.

As a result of these, the first resin component and the fiberized fibers DF are mixed adequately by the mixing section 300. Unevenness in the manufactured thermally fused board S4 can be reduced, and the thermally fused board S4 can be enhanced in strength.

As thus described, the manufacturing apparatus 1 and the mixing apparatus 2 of the present embodiment configure the mixing section 300 at a midway position on the carriage pipe section 60 via the introduction port portion 301 and the discharge port portion 302. In other words, the mixing section 300 receives the unmixed fiberized fibers DF0 from the carriage pipe section 60 through the introduction port portion 301, mixes them into the mixed fiberized fibers DF1, and returns the mixed fiberized fibers DF1 to the carriage pipe section 60 through the discharge port portion 302.

In this way, at part of the carriage pipe section 60, the mixing section 300 can mix the fiberized fibers DF and the first resin component N1 and produce the mixed fiberized fibers DF1, which are a deposition fiber material.

With such a configuration, the manufacturing apparatus 1 and the mixing apparatus 2 can mix the first resin component and the fiberized fibers DF adequately in the mixing section 300. As a result, unevenness in the manufactured thermally fused board S4 can be reduced, and the thermally fused board S4 can be enhanced in strength.

Although the present embodiment has been described above in detail with reference to the drawings, specific configurations are not limited to the ones in the embodiment, and modification, replacement, deletion, and the like may be made without departing from the gist of the disclosure.

## Claims

1. A thermally fused board manufacturing apparatus comprising:
a fiberizing section that produces a fiber material by fiberizing a raw material containing fabric;
a material supply pipe section that carries the fiber material;
a humidifying section configured to humidify the fiber material;
a carriage pipe section that adds a material different from the fiber material to the fiber material and carries the material and the fiber material;
a mixing section that produces a deposition fiber material by mixing the material and the fiber material, at part of the carriage pipe section;
a depositing section that forms a fiber aggregate by depositing the deposition fiber material;
a thermal fusing section that forms a thermally fused board by applying heat and pressure to the fiber aggregate; and
a controller that controls the humidifying section.

2. The thermally fused board manufacturing apparatus according to claim 1, wherein
the material added to the fiber material is a fiber-shaped thermally meltable resin material, and
an average longitudinal fiber length of the resin material is 1 mm or above and 20 mm or below.

3. The thermally fused board manufacturing apparatus according to claim 2, wherein
the mixing section includes a duct portion,
the duct portion has an introduction port portion, and
a diameter of the introduction port portion is longer than the average longitudinal fiber length.

4. The thermally fused board manufacturing apparatus according to claim 3, wherein
the duct portion has a discharge port portion, and
a diameter of the discharge port portion is longer than the average longitudinal fiber length.

5. The thermally fused board manufacturing apparatus according to claim 1, wherein
the mixing section includes a duct portion,
the duct portion has an introduction port portion and a discharge port portion, and
an angle formed by the introduction port portion and the discharge port portion is 85° or above and 95° or below.

6. The thermally fused board manufacturing apparatus according to claim 1, wherein
the mixing section includes a duct portion and has, in the duct portion, a sensor that detects humidity, and
the controller controls the humidifying section based on the humidity detected by the sensor.

7. The thermally fused board manufacturing apparatus according to claim 1, wherein
the humidifying section is located upstream of the mixing section in a direction in which the fiber material is carried.

8. A mixing apparatus comprising:
a carriage pipe section that adds a fiber-shaped thermally meltable resin material to a fiber material obtained by fiberization of a raw material containing fabric and carries the resin material and the fiber material and
a mixing section, at part of the carriage pipe section, that produces a deposition fiber material by mixing the resin material and the fiber material, wherein
the mixing section has
a vane portion having a plurality of rib-shaped vanes on a rotatable disc and
a duct portion that couples the carriage pipe section in such a manner that the carriage pipe section faces the vane portion, and
in the vane portion, an interval of adjacent ones of the vanes is larger than average longitudinal fiber lengths of the fiber material and the resin material.

9. The mixing apparatus according to claim 8, wherein
the average longitudinal fiber length of the resin material is 1 mm or above and 20 mm or below.

10. The mixing apparatus according to claim 9, wherein
the duct portion has an introduction port portion coupled to the carriage pipe section, and
a diameter of the introduction port portion is larger than the average longitudinal fiber length.

11. The mixing apparatus according to claim 9, wherein
the duct portion has a discharge port portion coupled to the carriage pipe section, and
a diameter of the discharge port portion is larger than the average longitudinal fiber length.

12. The mixing apparatus according to claim 8, wherein
the duct portion has an introduction port portion and a discharge port portion that are coupled to the carriage pipe section, and
an angle formed by the introduction port portion and the discharge port portion is 85° or above and 95° or below.
